# EUROPEAN PATENT SPECIFICATION

(11) **EP 1 802 447 B1**
(45) Date of publication and mention of the grant of the patent: **26.01.2011**
(21) Application number: 05796307.6
(22) Date of filing: 15.09.2005
(51) Int. Cl.: B29C 65/20

(54) **METHOD FOR REDUCING STRINGINESS OF A RESINOUS COMPOSITION DURING HOT PLATE WELDING**
VERFAHREN ZUR VERMINDERUNG DER FASERIGKEIT EINER HARZZUSAMMENSETZUNG BEIM HEIZELEMENTSCHWEISSEN
PROCEDE POUR REDUIRE LA NATURE FILANDREUSE D'UNE COMPOSITION RESINEUSE AU COURS DU SOUDAGE PAR PLAQUE CHAUFFANTE

(30) Priority: 29.09.2004 US 953721
(43) Date of publication of application: 04.07.2007
(73) Proprietor: SABIC Innovative Plastics IP B.V., 4612 PX Bergen op Zoom (NL)
(72) Inventor: DHAWAN, Sandeep, Vienna, WV 26105 (US); VILASAGAR, Shripathy, Parkersburg, WV 26104 (US)
(74) Representative: Gesthuysen, von Rohr & Eggert
(86) International application number: PCT/US2005/032866
(87) International publication number: WO 2006/039110

(56) References cited:
- WO-A-01/02487
- US-B1- 6 270 615
- US-B1- 6 450 675
- PATENT ABSTRACTS OF JAPAN vol. 1999, no. 02, 26 February 1999 (1999-02-26) -& JP 10 298419 A (MITSUBISHI ENG PLAST KK), 10 November 1998 (1998-11-10) cited in the application
- PATENT ABSTRACTS OF JAPAN vol. 1997, no. 05, 30 May 1997 (1997-05-30) -& JP 09 012902 A (SUMIKA A B S RATETSUKUSU KK), 14 January 1997 (1997-01-14) cited in the application
- PATENT ABSTRACTS OF JAPAN vol. 2000, no. 13, 5 February 2001 (2001-02-05) -& JP 2000 276909 A (KANEGAFUCHI CHEM IND CO LTD), 6 October 2000 (2000-10-06)
- PATENT ABSTRACTS OF JAPAN vol. 1997, no. 07, 31 July 1997 (1997-07-31) -& JP 09 087471 A (SUMIKA A B S LATEX KK), 31 March 1997 (1997-03-31)
- PATENT ABSTRACTS OF JAPAN vol. 1997, no. 07, 31 July 1997 (1997-07-31) -& JP 09 087472 A (SUMIKA A B S LATEX KK), 31 March 1997 (1997-03-31)
- PATENT ABSTRACTS OF JAPAN vol. 2002, no. 08, 5 August 2002 (2002-08-05) -& JP 2002 097334 A (KANEGAFUCHI CHEM IND CO LTD), 2 April 2002 (2002-04-02)
- PATENT ABSTRACTS OF JAPAN vol. 2000, no. 24, 11 May 2001 (2001-05-11) -& JP 2001 207000 A (DENKI KAGAKU KOGYO KK), 31 July 2001 (2001-07-31)
- PATENT ABSTRACTS OF JAPAN vol. 1999, no. 02, 26 February 1999 (1999-02-26) -& JP 10 310676 A (MITSUBISHI RAYON CO LTD), 24 November 1998 (1998-11-24)
- PATENT ABSTRACTS OF JAPAN vol. 2002, no. 08, 5 August 2002 (2002-08-05) -& JP 2002 096394 A (DENKI KAGAKU KOGYO KK), 2 April 2002 (2002-04-02)
- PATENT ABSTRACTS OF JAPAN vol. 1999, no. 12, 29 October 1999 (1999-10-29) -& JP 11 199729 A (DENKI KAGAKU KOGYO KK), 27 July 1999 (1999-07-27)
- PATENT ABSTRACTS OF JAPAN vol. 2003, no. 12, 5 December 2003 (2003-12-05) -& JP 2004 300323 A (NIPPON A & L KK), 28 October 2004 (2004-10-28)

## Description

### BACKGROUND OF THE INVENTION

The present invention relates to a method for reducing or eliminating stringiness in a resinous composition during hot plate welding. Hot plate welding is a well-known method for bonding two articles together, at least one of which articles comprises a resinous composition. Typically, hot plate welding comprises pressing a hot plate or heated surface against a first article, for example a molded article, comprising a solid resinous composition, thereby melting a portion of the surface of said article, and then adhering the melted portion to a second article, typically under pressure, to form a final article. Hot plate welding has the advantage of providing environmental protection because the method does not require sealing by an adhesive and does not use solvents or volatile organic compounds (VOC's). In the hot plate welding method, however, when the surface of the above-mentioned resinous composition is melted by a hot plate and then the hot plate is separated from the melted resin, the melted resin is sometimes drawn out from the surface in the form of strings (hereinafter referred to as "stinginess"). Such strings stick to the surface of the molded or formed product causing inferior appearance, increasing cycle time in the welding process, and reducing adhesion between the two articles. Past efforts for reducing stringiness during the hot plate welding process have relied on the use of specific resin combinations as in U.S. Patent No. 6,270,615 and in published Japanese patent application 10-298419, or on the use of specific additives in resinous compositions, such as the addition of an antistatic agent as in U.S. Patent No. 6,450,675 or the addition of a fluoro resin as in published Japanese patent application 09-012902. However, use of specific additives is not generally applicable to all types of resinous compositions. There remains a need for a more general method for reducing or eliminating stringiness during hot plate welding of articles comprising resinous compositions. There also remains a need for a more general method for reducing cycle time which is adversely affected by stringiness during hot plate welding of articles comprising resinous compositions.

### BRIEF DESCRIPTION OF THE INVENTION

The present inventors have discovered a method for reducing stringiness and reducing cycle time in the hot plate welding process. The present invention comprises a method for reducing stringiness during hot plate welding of an article comprising a resinous composition which comprises at least one step of contacting with water a surface of the article to be welded. Various other features, aspects, and advantages of the present invention will become more apparent with reference to the following description and appended claims.

According to the present invention, there is provided a method as defined in Claim 1 for reducing stringiness during hot plate welding of an article comprising a resinous composition. Further embodiments of the present invention are comprised by the respective dependent claims.

### DETAILED DESCRIPTION OF THE INVENTION

In the following specification and the claims which follow, reference will be made to a number of terms which shall be defined to have the following meanings. The singular forms "a", "an" and "the" include plural referents unless the context clearly dictates otherwise. "Optional" or "optionally" means that the subsequently described event or circumstance may or may not occur, and that the description includes instances where the event occurs and instances where it does not. The terminology "monoethylenically unsaturated" means having a single site of ethylenic unsaturation per molecule. The terminology "polyethylenically unsaturated" means having two or more sites of ethylenic unsaturation per molecule. The term "acrylic polymers" means polymers comprising structural units derived from at least one (C₁-C₁₂)alkyl(meth)acrylate monomer. The terminology "(meth)acrylate" refers collectively to acrylate and methacrylate; for example, the term "(meth)acrylate monomers" refers collectively to acrylate monomers and methacrylate monomers. The term "(meth)acrylamide" refers collectively to acrylamides and methacrylamides.

The term "alkyl" as used in the various embodiments of the present invention is intended to designate linear alkyl, branched alkyl, arakyl, cycloalkyl, bicycloalkyl, tricycloalkyl and polycycloalkyl radicals containing carbon and hydrogen atoms, and optionally containing atoms in addition to carbon and hydrogen, for example atoms selected from Groups 15, 16 and 17 of the Periodic Table. Alkyl groups may be saturated or unsaturated, and may comprise, for example, vinyl or allyl. The term "alkyl" also encompasses that alkyl portion of alkoxide groups. Unless otherwise specified, normal and branched alkyl radicals are those containing from 1 to about 32 carbon atoms, and include as illustrative non-limiting examples C₁-C₃₂ alkyl (optionally substituted with one or more groups selected from C₁-C₃₂ alkyl, C₃-C₁₅ cycloalkyl or aryl); and C₃-C₁₅ cycloalkyl optionally substituted with one or more groups selected from C₁-C₃₂ alkyl. Some particular illustrative examples comprise methyl, ethyl, n-propyl, isopropyl, n-butyl, sec-butyl, tertiary-butyl, pentyl, neopentyl, hexyl, heptyl, octyl, nonyl, decyl, undecyl and dodecyl. Some illustrative non-limiting examples of cycloalkyl and bicycloalkyl radicals include cyclobutyl, cyclopentyl, cyclohexyl, methylcyclohexyl, cycloheptyl, bicycloheptyl and adamantyl. In various embodiments aralkyl radicals are those containing from 7 to about 14 carbon atoms; these include, but are not limited to, benzyl, phenylbutyl, phenylpropyl, and phenylethyl. The term "aryl" as used in the various embodiments of the present invention is intended to designate substituted or unsubstituted aryl radicals containing from 6 to 20 ring carbon atoms. Some illustrative non-limiting examples of these aryl radicals include C₆-C₂₀ aryl optionally substituted with one or more groups selected from C₁-C₃₂ alkyl, C₃-C₁₅ cycloalkyl, aryl, and functional groups comprising atoms selected from Groups 15, 16 and 17 of the Periodic Table. Some particular illustrative examples of aryl radicals comprise substituted or unsubstituted phenyl, biphenyl, tolyl, naphthyl and binaphthyl.

The method of the present invention comprises a step of contacting with water a surface of a first article comprising a solid resinous composition to be hot plate welded. In some embodiments said first article is a molded article. The method of the invention may also comprise the steps of (i) contacting a hot plate against the surface of the first article which had been previously contacted with water, thereby melting a portion of the surface of said article, (ii) removing the hot plate from said surface, and then (iii) adhering the melted portion to a second article, typically under pressure, to form a final article. Said second article may optionally comprise a resinous composition. The contacted surface of said second article may optionally be melted before contact with said first article. If melted, the contacted surface of said second article may optionally have been previously contacted with water, In a particular embodiment the method of the invention may further comprise the steps of (iv) contacting a hot plate against the surface of the second article which had optionally been previously contacted with water, thereby melting a portion of the surface of said article, and (v) removing the hot plate from said surface.

In the present context the term "hot plate" comprises any heated surface for contact with the article to be welded. In one embodiment the entire article is contacted with water. In another embodiment at least that surface to be subsequently contacted with the hot plate, or at least that portion of said surface to be subsequently contacted with the hot plate is contacted with water. In another embodiment only that surface to be subsequently contacted with the hot plate, or only that portion of said surface to be subsequently contacted with the hot plate is contacted with water. Contact with water may be performed by any effective method, whereas in the present context "effective method" means that the amount of stringiness observed from the surface of said article is reduced or eliminated compared to that observed from the surface of an article not contacted with water. The form of water used for contact may be liquid, solid, or gaseous. Methods for contacting with water comprise immersing the article completely in water; immersing in water at least that surface of the article to be subsequently contacted with the hot plate; contacting at least that surface of the article to be subsequently contacted with the hot plate or at least that portion of said surface to be subsequently contacted with the hot plate with a medium comprising water such as, but not limited to, a spray of water, a steam jet, a wet paper towel, a wet sponge, a wet cloth, a wet conveyer belt, moist air, and the like. In another embodiment contact with water is provided by aging the article in an open or closed chamber which is maintained at a higher humidity than ambient, or in which mist or moist air is circulating. The process for contacting with water may be batch, continuous, or semi-continuous. The time and conditions under which said surface is contacted with water are those which are effective to reduce or eliminate the amount of stringiness observed from the surface of said article compared to that observed from the surface of an article not contacted with water. In some embodiments contact conditions comprise autogenous temperature. In some embodiments any excess water may be removed from the surface before hot plate welding.

The temperature range for the hot plate and time of contact with an article to be welded are those which are effective to effect welding of the articles which comprise the final article. In various embodiments the temperature and time of contact will depend upon the specific type of resinous composition comprising the article contacted with the hot plate, and may be readily determined without undue experimentation. In some specific embodiments the temperature of the hot plate may be in a range of between about 250°C to about 500°C.

In some embodiments resinous compositions suitable for use in the method of the present invention comprise a rubber modified thermoplastic resin comprising a discontinuous elastomeric phase dispersed in a rigid thermoplastic phase, wherein at least a portion of the rigid thermoplastic phase is grafted to the elastomeric phase. The rubber modified thermoplastic resin employs at least one rubber substrate for grafting. The rubber substrate comprises the discontinuous elastomeric phase of the composition. There is no particular limitation on the rubber substrate provided it is susceptible to grafting by at least a portion of a graftable monomer. In some embodiments suitable rubber substrates comprise dimethyl siloxane/acrylate rubber, or silicone/acrylate composite rubber, wherein illustrative examples of acrylate comprise butyl, iso-octyl, 2-ethylhexyl and the like; polyolefin rubbers such as ethylene-propylene rubber or ethylene-propylene-diene (EPDM) rubber; or silicone rubber polymers such as polydimethyl siloxane rubber. The rubber substrate typically has a glass transition temperature, Tg, in one embodiment less than or equal to 25°C, in another embodiment below about 0°C, in another embodiment below about minus 20°C, in another embodiment below about minus 30°C, in another embodiment below about minus 50°C, in still another embodiment below about minus 80°C, and in yet another embodiment below about minus 100°C. As referred to herein, the Tg of a polymer is the T value of polymer as measured by differential scanning calorimetry (DSC; heating rate 20°C/minute, with the Tg value being determined at the inflection point).

In one embodiment the rubber substrate is derived from polymerization by known methods of at least one monoethylenically unsaturated alkyl (meth)acrylate monomer selected from (C₁-C₁₂)alkyl(meth)acrylate monomers and mixtures comprising at least one of said monomers. As used herein, the terminology "(Cₓ-C_{y})", as applied to a particular unit, such as, for example, a chemical compound or a chemical substituent group, means having a carbon atom content of from "x" carbon atoms to "y" carbon atoms per such unit. For example, "(C₁-C₁₂)alkyl" means a straight chain, branched or cyclic alkyl substituent group having from 1 to 12 carbon atoms per group. Suitable (C₁-C₁₂)alkyl(meth)acrylate monomers include, but are not limited to, (C₁-C₁₂)alkyl acrylate monomers, illustrative examples of which comprise ethyl acrylate, butyl acrylate, iso-pentyl acrylate, n-hexyl acrylate, and 2-ethyl hexyl acrylate; and their (C₁-C₁₂)alkyl methacrylate analogs, illustrative examples of which comprise methyl methacrylate, ethyl methacrylate, propyl methacrylate, iso-propyl methacrylate, butyl methacrylate, hexyl methacrylate, and decyl methacrylate. In a particular embodiment of the present invention the rubber substrate comprises structural units derived from n-butyl acrylate.

In various embodiments the rubber substrate may also optionally comprise a minor amount, for example up to about 5 wt.%, of structural units derived from at least one polyethylenically unsaturated monomer, for example those that are copolymerizable with a monomer used to prepare the rubber substrate. A polyethylenically unsaturated monomer is often employed to provide cross-linking of the rubber particles and/or to provide "graftlinking" sites in the rubber substrate for subsequent reaction with grafting monomers. Suitable polyethylenically unsaturated monomers include, but are not limited to, butylene diacrylate, divinyl benzene, butene diol dimethacrylate, trimethylolpropane tri(meth)acrylate, allyl methacrylate, diallyl methacrylate, diallyl maleate, diallyl fumarate, diallyl phthalate, triallyl methacrylate, triallyl cyanurate, triallyl isocyanurate, the acrylate of tricyclodecenylalcohol and mixtures comprising at least one of such monomers. In a particular embodiment the rubber substrate comprises structural units derived from triallyl cyanurate.

In some embodiments the rubber substrate may optionally comprise structural units derived from minor amounts of other unsaturated monomers, for example those that are copolymerizable with a monomer used to prepare the rubber substrate. In particular embodiments the rubber substrate may optionally include up to about 25 wt.% of structural units derived from one or more monomers selected from (meth)acrylate monomers, alkenyl aromatic monomers and monoethylenically unsaturated nitrile monomers. Suitable copolymerizable (meth)acrylate monomers include, but are not limited to, C₁-C₁₂ aryl or haloaryl substituted acrylate, C₁-C₁₂ aryl or haloaryl substituted methacrylate, or mixtures thereof; monoethylenically unsaturated carboxylic acids, such as, for example, acrylic acid, methacrylic acid and itaconic acid; glycidyl (meth)acrylate, hydroxy alkyl (meth)acrylate, hydroxy(C₁-C₁₂)alkyl (meth)acrylate, such as, for example, hydroxyethyl methacrylate; (C₄-C₁₂)cycloalkyl (meth)acrylate monomers, such as, for example, cyclohexyl methacrylate; (meth)acrylamide monomers, such as, for example, acrylamide, methacrylamide and N-substituted-acrylamide or N-substituted-methacrylamides; maleimide monomers, such as, for example, maleimide, N-alkyl maleimides, N-aryl maleimides, N-phenyl maleimide, and haloaryl substituted maleimides; maleic anhydride; methyl vinyl ether, ethyl vinyl ether, and vinyl esters, such as, for example, vinyl acetate and vinyl propionate. Suitable alkenyl aromatic monomers include, but are not limited to, vinyl aromatic monomers, such as, for example, styrene and substituted styrenes having one or more alkyl, alkoxy, hydroxy or halo substituent groups attached to the aromatic ring, including, but not limited to, alpha-methyl styrene, p-methyl styrene, 3,5-diethylstyrene, 4-n-propylstyrene, 4-isopropylstyrene, vinyl toluene, alpha-methyl vinyl toluene, vinyl xylene, trimethyl styrene, butyl styrene, t-butyl styrene, chlorostyrene, alpha-chlorostyrene, dichlorostyrene, tetrachlorostyrene, bromostyrene, alpha-bromostyrene, dibromostyrene, p-hydroxystyrene, p-acetoxystyrene, methoxystyrene and vinyl-substituted condensed aromatic ring structures, such as, for example, vinyl naphthalene, vinyl anthracene, as well as mixtures of vinyl aromatic monomers and monoethylenically unsaturated nitrile monomers such as, for example, acrylonitrile, ethacrylonitrile, methacrylonitrile, alpha-bromoacrylonitrile and alpha-chloro acrylonitrile. Substituted styrenes with mixtures of substituents on the aromatic ring are also suitable. As used herein, the term "monoethylenically unsaturated nitrile monomer" means an acyclic compound that includes a single nitrile group and a single site of ethylenic unsaturation per molecule and includes, but is not limited to, acrylonitrile, methacrylonitrile, alpha-chloro acrylonitrile, and the like.

There is no particular limitation on the particle size distribution of the rubber substrate (sometimes referred to hereinafter as initial rubber substrate to distinguish it from the rubber substrate following grafting). In some embodiments the initial rubber substrate may possess a broad particle size distribution with particles ranging in size from about 50 nanometers (nm) to about 1000 nm. In other embodiments the mean particle size of the initial rubber substrate may be less than about 100 nm. In still other embodiments the mean particle size of the initial rubber substrate may be in a range of between about 80 nm and about 500 nm. In still other embodiments the mean particle size of the initial rubber substrate may be in a range of between about 200 nm and about 750 nm. In other embodiments the mean particle size of the initial rubber substrate may be greater than about 400 nm. In still other embodiments the initial rubber substrate comprises particles which are a mixture of particle sizes with at least two mean particle size distributions. In a particular embodiment the initial rubber substrate comprises particles which are a mixture of particle sizes with two mean particle size distributions each in a range of between about 80 nm and about 500 nm,

The rubber substrate may be made according to known methods, such as, but not limited to, a bulk, solution, or emulsion process. In one non-limiting embodiment the rubber substrate is made by aqueous emulsion polymerization in the presence of a free radical initiator, e.g., an azonitrile initiator, an organic peroxide initiator, a persulfate initiator or a redox initiator system, and, optionally, in the presence of a chain transfer agent, e.g., an alkyl mercaptan, to form particles of rubber substrate.

The rigid thermoplastic resin phase of the rubber modified thermoplastic resin comprises one or more thermoplastic polymers. In one embodiment of the present invention monomers are polymerized in the presence of the rubber substrate to thereby form a rigid thermoplastic phase, at least a portion of which is chemically grafted to the elastomeric phase. The portion of the rigid thermoplastic phase chemically grafted to rubber substrate is sometimes referred to hereinafter as grafted copolymer. The rigid thermoplastic phase comprises a thermoplastic polymer or copolymer that exhibits a glass transition temperature (Tg) in one embodiment of greater than about 25°C, in another embodiment of greater than or equal to 90°C, and in still another embodiment of greater than or equal to 100°C.

In a particular embodiment the rigid thermoplastic phase comprises a polymer having structural units derived from one or more monomers selected from the group consisting of (C₁-C₁₂)alkyl-(meth)acrylate monomers, aryl-(meth)acrylate monomers, alkenyl aromatic monomers and monoethylenically unsaturated nitrile monomers. Suitable (C₁-C₁₂)alkyl-(meth)acrylate and axyl-(meth)acrylate monomers, alkenyl aromatic monomers and monoethylenically unsaturated nitrile monomers include those set forth hereinabove in the description of the rubber substrate. In addition, the rigid thermoplastic resin phase may, provided that the Tg limitation for the phase is satisfied, optionally include up to about 10 wt.% of third repeating units derived from one or more other copolymerizable monomers. Illustrative examples of copolymerizable monomers comprise copolymerizable (meth)acrylate monomers.

In one embodiment the rigid thermoplastic phase comprises an alkenyl aromatic polymer having structural units derived from one or more alkenyl aromatic monomers and from one or more monoethylenically unsaturated nitrile monomers. Examples of such alkenyl aromatic polymers include, but are not limited to, styrene/acrylonitrile copolymers, alpha-methylstyrene/acrylonitrile copolymers, or alpha-methylstyrene/styrene/acrylonitrile copolymers. In another particular embodiment the rigid thermoplastic phase comprises an alkenyl aromatic polymer having structural units derived from one or more alkenyl aromatic monomers; from one or more monoethylenically unsaturated nitrile monomers; and from one or more monomers selected from the group consisting of (C₁-C₁₂)alkyl- and aryl-(meth)acrylate monomers. Examples of such alkenyl aromatic polymers include, but are not limited to, styrene/acrylonitrile/methyl methacrylate copolymers, alpha-methylstyrene/acrylonitrile/methyl methacrylate copolymers and alpha-methylstyrene/styrene/acrylonitrile/methyl methacrylate copolymers. Further examples of suitable alkenyl aromatic polymers comprise styrene/methyl methacrylate copolymers, styrene/maleic anhydride copolymers; styrene/acrylonitrile/maleic anhydride copolymers, and styrene/acrylonitrile/acrylic acid copolymers. These copolymers may be used for the rigid thermoplastic phase either individually or as mixtures.

When structural units in copolymers are derived from one or more monoethylenically unsaturated nitrile monomers, then the amount of nitrile monomer added to form the copolymer comprising the grafted copolymer and the rigid thermoplastic phase may be in one embodiment in a range of between about 5 wt.% and about 40 wt.%, in another embodiment in a range of between about 5 wt.% and about 30 wt.%, in another embodiment in a range of between about 10 wt.% and about 30 wt.%, and in yet another embodiment in a range of between about 15 wt.% and about 30 wt.%, based on the total weight of monomers added to form the copolymer comprising the grafted copolymer and the rigid thermoplastic phase.

When structural units in copolymers are derived from one or more (C₁-C₁₂)alkyl- and aryl-(meth)acrylate monomers, then the amount of the said monomer added to form the copolymer comprising the grafted copolymer and the rigid thermoplastic phase may be in one embodiment in a range of between about 5 wt.% and about 50 wt.%, in another embodiment in a range of between about 5 wt.% and about 45 wt.%, in another embodiment in a range of between about 10 wt.% and about 35 wt.%, and in yet another embodiment in a range of between about 15 wt.% and about 35 wt.%, based on the total weight of monomers added to form the copolymer comprising the grafted copolymer and the rigid thermoplastic phase.

The rigid thermoplastic phase may be present in the rubber modified thermoplastic resin in one embodiment at a level of from about 85 wt.% to about 6 wt.%; in another embodiment at a level of from about 65 wt.% to about 6 wt.%; in another embodiment at a level of from about 60 wt.% to about 20 wt.%; in another embodiment at a level of from about 75 wt.% to about 40 wt%, and in still another embodiment at a level of from about 60 wt.% to about 50 wt.%, based on the weight of the rubber modified thermoplastic resin. In other embodiments the rigid thermoplastic phase may be present in a range of between about 90 wt.% and about 30 wt.%, based on the weight of the rubber modified thermoplastic resin. Two or more different rubber substrates, each possessing a different mean particle size, may be separately employed in a polymerization reaction to prepare rigid thermoplastic phase, and then the products blended together to make the rubber modified thermoplastic resin. In illustrative embodiments wherein such products each possessing a different mean particle size of initial rubber substrate are blended together, then the ratios of said substrates may be in a range of about 90:10 to about 10:90, or in a range of about 80:20 to about 20:80, or in a range of about 70:30 to about 30:70. In some embodiments an initial rubber substrate with smaller particle size is the major component in such a blend containing more than one particle size of initial rubber substrate.

The rigid thermoplastic phase may be formed solely by polymerization carried out in the presence of rubber substrate, or by addition of one or more separately synthesized rigid thermoplastic polymers to the rubber modified thermoplastic resin comprising the composition, or by a combination of both processes. In some embodiments the separately synthesized rigid thermoplastic polymer comprises structural units essentially identical to those of the rigid thermoplastic phase comprising the rubber modified thermoplastic resin. In some particular embodiments separately synthesized rigid thermoplastic polymer comprises structural units derived from styrene and acrylonitrile; alpha-methylstyrene and acrylonitrile; alpha-methylstyrene, styrene, and acrylonitrile; styrene, acrylonitrile, and methyl methacrylate; alpha-methyl styrene, acrylonitrile, and methyl methacrylate; or alpha-methylstyrene, styrene, acrylonitrile, and methyl methacrylate. When at least a portion of separately synthesized rigid thermoplastic polymer is added to the rubber modified thermoplastic resin, then the amount of said separately synthesized rigid thermoplastic polymer added is in one embodiment in a range of between about 5 wt.% and about 90 wt.%, in another embodiment in a range of between about 5 wt.% and about 80 wt.%, in another embodiment in a range of between about 10 wt.% and about 70 wt.%, in another embodiment in a range of between about 15 wt.% and about 65 wt.%, and in still another embodiment in a range of between about 20 wt.% and about 65 wt.%, based on the weight of resinous components in the composition. Two or more different rubber substrates, each possessing a different mean particle size, may be separately employed in a polymerization reaction to prepare rigid thermoplastic phase, and then the products blended together to make the rubber modified thermoplastic resin. In illustrative embodiments wherein such products each possessing a different mean particle size of initial rubber substrate are blended together, then the ratios of said substrates may be in a range of about 90:10 to about 10:90, or in a range of about 80:20 to about 20:80, or in a range of about 70:30 to about 30:70. In some embodiments an initial rubber substrate with smaller particle size is the major component in such a blend containing more than one particle size of initial rubber substrate.

The rigid thermoplastic phase may be made according to known processes, for example, mass polymerization, emulsion polymerization, suspension polymerization or combinations thereof, wherein at least a portion of the rigid thermoplastic phase is chemically bonded, i.e., "grafted" to the rubber phase via reaction with unsaturated sites present in the rubber phase. The grafting reaction may be performed in a batch, continuous or semi-continuous process. Representative procedures include, but are not limited to, those taught in U.S. Patent No. 3,944,631; and in U.S. patent application Serial No. 08/962,458, filed October 31, 1997. The unsaturated sites in the rubber phase are provided, for example, by residual unsaturated sites in those structural units of the rubber that were derived from a graftlinking monomer. In some embodiments of the present invention monomer grafting to rubber substrate with concomitant formation of rigid thermoplastic phase may optionally be performed in stages wherein at least one first monomer is grafted to rubber substrate followed by at least one second monomer different from said first monomer. Representative procedures for staged monomer grafting to rubber substrate include, but are not limited to, those taught in commonly assigned U.S. patent application Serial No. 10/748,394, filed December 30, 2003.

In a preferred embodiment the rubber modified thermoplastic resin is an ASA (acrylonitrile-styrene-acrylate) resin such as that manufactured and sold by General Electric Company under the trademark GELOY^{®}. In one embodiment a suitable ASA resin is an acrylate-modified acrylonitrile-styrene-acrylate resin. ASA resins include, for example, those disclosed in U.S. Patent No. 3,711,575. ASA resins also comprise those described in commonly assigned U.S. Patent Nos. 4,731,414 and 4,831,079. In some embodiments of the invention where an acrylate-modified ASA is used, the ASA component further comprises structural units derived from monomers selected from the group consisting of C₁ to C₁₂ alkyl- and aryl-(meth)acrylate as part of either the rigid phase, the rubber phase, or both. Such copolymers are referred to as acrylate-modified acrylonitrile-styrene-acrylate resins, or acrylate-modified ASA resins. A preferred monomer is methyl methacrylate and the resulting modified polymer is sometimes referred to hereinafter as "MMA-ASA".

Other resinous compositions suitable for use in the method of the present invention comprise polymers with structural derived from alkenyl aromatic monomers, optionally combined with other monomers. Examples of such alkenyl aromatic polymers include, but are not limited to, polystyrene, syndiotactic polystyrene, styrene/acrylonitrile copolymers (SAN), alpha-methylstyrene/acrylonitrile copolymers (AMSAN), alpha-methylstyrene/styrene/acrylonitrile copolymers, styrene/acrylonitrile/methyl methacrylate copolymers (MMA-SAN), alpha-methylstyrene/acrylonitrile/methyl methacrylate copolymers, alpha-methylstyrene/styrene/acrylonitrile/methyl methacrylate copolymers, styrene/methyl methacrylate copolymers, styrene/maleic anhydride copolymers; styrene/acrylonitrile/maleic anhydride copolymers, styrene/acrylonitrile/acrylic acid copolymers; and acrylonitrile-butadiene-styrene copolymer (ABS). Still other resinous compositions suitable for use in the method of the present invention comprise acrylic polymers; poly(methyl methacrylate) (PMMA); rubber-modified acrylic polymers; rubber-modified PMMA; poly(vinyl chloride) (PVC); polycarbonates (PC); and mixtures comprising at least one of the aforementioned materials, including, but not limited to, mixtures of ASA and PC; mixtures of ASA and a polyamide; mixtures of ABS and PC; mixtures of ABS and a polyester; mixtures of ABS and poly(butylene terephthalate); mixtures of ABS and an acrylic polymer; and mixtures of ABS and PMMA. In other particular embodiments PC consists essentially of bisphenol A polycarbonate. Additional illustrative examples of suitable resinous compositions comprise polyesters, such as poly(alkylene terephthalates), poly(alkylene naphthalates), poly(ethylene terephthalate), poly(butylene terephthalate), poly(trimethylene terephthalate), poly(ethylene naphthalate), poly(butylene naphthalate), poly(cyclohexanedimethanol terephthalate), poly(cyclohexanedimethanol-co-ethylene terephthalate), poly(1,4-cyclohexane-dimethyl-1,4-cyclohexcardicarboxylate), polyarylates, the polyarylate with structural units derived from resorcinol and a mixture of iso- and terephthalic acids; polyestercarbonates, the polyestercarbonate with structural units derived from bisphenol A, carbonic acid and a mixture of iso- and terephthalic acids, the polyestercarbonate with structural units derived from resorcinol, carbonic acid and a mixture of iso- and terephthalic acids, and the polyestercarbonate with structural units derived from bisphenol A, resorcinol, carbonic acid and a mixture of iso- and terephthalic acids. Further additional illustrative examples of suitable resinous compositions comprise aromatic polyethers such as polyarylene ether homopolymers and copolymers such as those comprising 2,6-dimethyl-1,4-phenylene ether units, optionally in combination with 2,3,6-trimethyl-1,4-phenylene ether units; polyetherimides, polyetherketones, polyetheretherketones, polyethersulfones; polyarylene sulfides and sulfones, such as polyphenylene sulfides, polyphenylene sulfones, and copolymers of polyphenylene sulfides with polyphenylene sulfones; polyamides, such as poly(hexamethylene adipamide) and poly(ε-aminocaproamide); polyolefin homopolymers and copolymers, such as polyethylene, polypropylene, and copolymers containing at least one of ethylene and propylene; polyacrylates, poly(methyl methacrylate), and poly(ethylene-co-acrylate)s including SURLYN. Blends, and particularly compatibilized blends comprising at least one of any of the aforementioned resins are also suitable, Illustrative examples of such blends include; but are not limited to, thermoplastic polyolefin (TPO); poly(phenylene ether)-polystyrene, polyphenylene ether)-polyamide, poly(phenylene ether)-polyester, poly(butylene terephthalate)-polycarbonate, poly(ethylene terephthalate)-polycarbonate, polycarbonate-polyetherimide, polyester-polyetherimide, and at least one of ASA or MMA-ASA in combination with at least one resin selected from the group consisting of SAN, AM-SAN, MMA-SAN, and combinations thereof. Suitable resins may comprise recycled or reground thermoplastic resin.

Compositions of the present invention may also optionally comprise additives known in the art including, but not limited to, fluoropolymers, polytetrafluoroethylene, silicone oil, stabilizers, such as color stabilizers, heat stabilizers, light stabilizers, antioxidants, UV screeners, and UV absorbers; flame retardants, anti-drip agents, lubricants, flow promoters and other processing aids; plasticizers, antistatic agents, mold release agents, impact modifiers, fillers, and colorants such as dyes and pigments which may be organic, inorganic or organometallic; and like additives. Illustrative additives include, but are not limited to, silica, silicates, zeolites, titanium dioxide, stone powder, glass fibers or spheres, carbon fibers, carbon black, graphite, calcium carbonate, talc, lithopone, zinc oxide, zirconium silicate, iron oxides, diatomaceous earth, calcium carbonate, magnesium oxide, chromic oxide, zirconium oxide, aluminum oxide, crushed quartz, clay, calcined clay, talc, kaolin, asbestos, cellulose, wood flour, cork, cotton and synthetic textile fibers, especially reinforcing fillers such as glass fibers, carbon fibers, metal fibers, and metal flakes, including, but not limited to aluminum flakes. Often more than one additive is included in compositions of the invention, and in some embodiments more than one additive of one type is included. In a particular embodiment a composition further comprises an additive selected from the group consisting of colorants, dyes, pigments, lubricants, stabilizers, heat stabilizers, light stabilizers, antioxidants, UV screeners, UV absorbers, fillers and mixtures thereof.

The compositions of the present invention can be formed into useful final articles. Illustrative final articles comprise any of those known to be made using a hot plate welding process. Particular final articles comprise a lamp employed for vehicle use such as a headlamp, turn signal lamp, or tail light lamp, in which a lamp lens is joined to a lamp body comprising a resinous composition. Other examples of final articles comprise joined plastic pipe, fuel filters, fuel tanks, brake fluid tanks, radiator expansion tanks, water pumps, vacuum reservoirs, batteries, and the like.

Without further elaboration, it is believed that one skilled in the art can, using the description herein, utilize the present invention to its fullest extent. The following examples are included to provide additional guidance to those skilled in the art in practicing the claimed invention. The examples provided are merely representative of the work that contributes to the teaching of the present application. Accordingly, these examples are not intended to limit the invention, as defined in the appended claims, in any manner.

In the following examples and comparative examples MMA-ASA-1 is a copolymer comprising structural units derived from about 9 wt.% methyl methacrylate, about 32 wt.% styrene, about 15 wt.% acrylonitrile, and about 45 wt.% butyl acrylate, wherein the initial rubber particle size was about 110 nm. MMA-ASA-2 is a copolymer comprising structural units derived from about 9 wt.% methyl methacrylate, about 32 wt.% styrene, about 15 wt.% acrylonitrile, and about 45 wt.% butyl acrylate, wherein the initial rubber particle size was about 500 nm. MMA-SAN is a copolymer comprising structural units derived from 35 wt.% methyl methacrylate, 40 wt.% styrene, and 25 wt.% acrylonitrile prepared by bulk polymerization. AM-SAN is a copolymer comprising structural units derived from 70 wt.% alpha-methyl styrene and 30 wt.% acrylonitrile prepared by bulk polymerization. The observed extent of the strings emanating from the test part surface is recorded as "none", "some", or "significant" based on a comparison of photographs of the test parts taken at the time of the test. This test is an empirical method and only relative comparisons can be made. The following examples and comparative examples illustrate the benefit of exposing molded test parts of resinous material to moisture in order to reduce or eliminate stringiness during hot plate welding. Cycle time between molding of the parts and hot plate welding was also decreased by exposing molded test parts of resinous material to moisture.

### EXAMPLE 1 AND COMPARATIVE EXAMPLE 1

The resinous material employed is a compounded blend comprising 40 parts by weight (pbw) AM-SAN, 15 pbw MMA-SAN, 33 pbw MMA-ASA-1, and 12 pbw MMA-ASA-2. Molded test parts of the blend are dried overnight under vacuum at 60°C and then cooled to room temperature in a desiccator to bring them to a dry state approximating the condition the bars would attain coming directly out of a molding machine. Test bars are individually removed from the desiccator and exposed to water vapor from a humidifier for 15 seconds, after which any excess water on the surface of bar is wiped off, and each bar is brought into contact with a hot plate for 10 seconds at 0.34 megapascals and 338°C, Upon removal of the bar from the hot plate, no stringing from the bar's surface is observed. The procedure of Example 1 is repeated except that each test bar is individually removed from the desiccator and brought into contact with a hot plate for 10 seconds at 0.34 megapascals and 338°C without significant exposure to moisture. Upon removal of the bar from the hot plate, significant stringing from the bar's surface is observed.

### EXAMPLE 2 AND COMPARATIVE EXAMPLE 2

The resinous material employed is the same as in Example 1. Molded test parts are placed in a circulating oven at 82°C for 4 hours. Test bars are individually removed from the oven and soaked in water for 8 hours at ambient temperature, after which any excess water on the surface of bar is wiped off, and each bar is brought into contact with a hot plate for 10 seconds at 0.28 megapascals and 338°C. Upon removal of the bar from the hot plate, only slight stringing from the bar's surface is observed. The procedure of Example 2 is repeated except that each test bar is individually removed from the oven and brought into contact with a hot plate for 10 seconds at 0.28 megapascals and 338°C without significant exposure to moisture. Upon removal of the bar from the hot plate, significant stringing from the bar's surface is observed.

### EXAMPLE 3 AND COMPARATIVE EXAMPLE 3

The resinous material employed is the same as in Example 1. Molded test parts are placed in a circulating oven at 82°C for 4 hours. Test bars are individually removed from the oven and aged for 8 hours at room temperature and ambient humidity (about 35-40% relative humidity), after which each bar is brought into contact with a hot plate for 10 seconds at 0.28 megapascals and 338°C. Upon removal of the bar from the hot plate, only some stringing from the bar's surface is observed. The procedure of Example 3 is repeated except that each test bar is individually removed from the oven and brought into contact with a hot plate for 10 seconds at 0.28 megapascals and 338°C without significant exposure to moisture. Upon removal of the bar from the hot plate, significant stringing from the bar's surface is observed.

### EXAMPLE 4 AND COMPARATIVE EXAMPLE 4

The resinous material employed comprises a bisphenol A polycarbonate. Molded test parts are dried in a circulating oven. Test bars are individually removed from the oven and contacted with water, after which, if necessary, any excess water on the surface of bar is wiped off, and each bar is brought into contact with a hot plate. Upon removal of the bar from the hot plate, only some stringing from the bar's surface is observed. The procedure of Example 4 is repeated except that each test bar is individually removed from the oven and brought into contact with the hot plate without significant exposure to moisture. Upon removal of the bar from the hot plate, significant stringing from the bar's surface is observed.

### EXAMPLE 5 AND COMPARATIVE EXAMPLE 5

The resinous material employed comprises a blend of bisphenol A polycarbonate and ASA. Molded test parts are dried in a circulating oven. Test bars are individually removed from the oven and contacted with water, after which, if necessary, any excess water on the surface of bar is wiped off, and each bar is brought into contact with a hot plate. Upon removal of the bar from the hot plate, only some stringing from the bar's surface is observed. The procedure of Example 5 is repeated except that each test bar is individually removed from the oven and brought into contact with the hot plate without significant exposure to moisture. Upon removal of the bar from the hot plate, significant stringing from the bar's surface is observed.

### EXAMPLE 6 AND COMPARATIVE EXAMPLE 6

The resinous material employed comprises a blend of ASA and a polyamide. Molded test parts are dried in a circulating oven. Test bars are individually removed from the oven and contacted with water, after which, if necessary, any excess water on the surface of bar is wiped off, and each bar is brought into contact with a hot plate. Upon removal of the bar from the hot plate, only some stringing from the bar's surface is observed. The procedure of Example 6 is repeated except that each test bar is individually removed from the oven and brought into contact with the hot plate without significant exposure to moisture. Upon removal of the bar from the hot plate, significant stringing from the bar's surface is observed.

### EXAMPLE 7 AND COMPARATIVE EXAMPLE 7

The resinous material employed comprises ABS. Molded test parts are dried in a circulating oven. Test bars are individually removed from the oven and contacted with water, after which, if necessary, any excess water on the surface of bar is wiped off, and each bar is brought into contact with a hot plate. Upon removal of the bar from the hot plate, only some stringing from the bar's surface is observed. The procedure of Example 7 is repeated except that each test bar is individually removed from the oven and brought into contact with the hot plate without significant exposure to moisture. Upon removal of the bar from the hot plate, significant stringing from the bar's surface is observed.

### EXAMPLE 8 AND COMPARATIVE EXAMPLE 8

The resinous material employed is a blend comprising ABS and bisphenol A polycarbonate. Molded test parts are dried in a circulating oven. Test bars are individually removed from the oven and contacted with water, after which, if necessary, any excess water on the surface of bar is wiped off, and each bar is brought into contact with a hot plate. Upon removal of the bar from the hot plate, only some stringing from the bar's surface is observed. The procedure of Example 8 is repeated except that each test bar is individually removed from the oven and brought into contact with the hot plate without significant exposure to moisture. Upon removal of the bar from the hot plate, significant stringing from the bar's surface is observed.

### EXAMPLE 9 AND COMPARATIVE EXAMPLE 9

The resinous material employed is a blend comprising ABS and poly(butylene terephthalate). Molded test parts are dried in a circulating oven. Test bars are individually removed from the oven and contacted with water, after which, if necessary, any excess water on the surface of bar is wiped off, and each bar is brought into contact with a hot plate. Upon removal of the bar from the hot plate, only some stringing from the bar's surface is observed. The procedure of Example 9 is repeated except that each test bar is individually removed from the oven and brought into contact with the hot plate without significant exposure to moisture. Upon removal of the bar from the hot plate, significant stringing from the bar's surface is observed.

### EXAMPLE 10 AND COMPARATIVE EXAMPLE 10

The resinous material employed is a blend comprising poly(butylene terephthalate) and bisphenol A polycarbonate. Molded test parts are dried in a circulating oven. Test bars are individually removed from the oven and contacted with water, after which, if necessary, any excess water on the surface of bar is wiped off, and each bar is brought into contact with a hot plate. Upon removal of the bar from the hot plate, only some stringing from the bar's surface is observed. The procedure of Example 10 is repeated except that each test bar is individually removed from the oven and brought into contact with the hot plate without significant exposure to moisture. Upon removal of the bar from the hot plate, significant stringing from the bar's surface is observed.

### EXAMPLE 11 AND COMPARATIVE EXAMPLE 11

The resinous material employed comprises poly(butylene terephthalate). Molded test parts are dried in a circulating oven. Test bars are individually removed from the oven and contacted with water, after which, if necessary, any excess water on the surface of bar is wiped off, and each bar is brought into contact with a hot plate. Upon removal of the bar from the hot plate, only some stringing from the bar's surface is observed. The procedure of Example 11 is repeated except that each test bar is individually removed from the oven and brought into contact with the hot plate without significant exposure to moisture. Upon removal of the bar from the hot plate, significant stringing from the bar's surface is observed.

### EXAMPLE 12 AND COMPARATIVE EXAMPLE 12

The resinous material employed is a blend comprising a polyphenylene ether and polystyrene. Molded test parts are dried in a circulating oven. Test bars are individually removed from the oven and contacted with water, after which, if necessary, any excess water on the surface of bar is wiped off, and each bar is brought into contact with a hot plate. Upon removal of the bar from the hot plate, only some stringing from the bar's surface is observed. The procedure of Example 12 is repeated except that each test bar is individually removed from the oven and brought into contact with the hot plate without significant exposure to moisture. Upon removal of the bar from the hot plate, significant stringing from the bar's surface is observed.

### EXAMPLE 13 AND COMPARATIVE EXAMPLE 13

The resinous material employed comprises a polyetherimide. Molded test parts are dried in a circulating oven. Test bars are individually removed from the oven and contacted with water, after which, if necessary, any excess water on the surface of bar is wiped off, and each bar is brought into contact with a hot plate. Upon removal of the bar from the hot plate, only some stringing from the bar's surface is observed. The procedure of Example 13 is repeated except that each test bar is individually removed from the oven and brought into contact with the hot plate without significant exposure to moisture, Upon removal of the bar from the hot plate, significant stringing from the bar's surface is observed.

### EXAMPLE 14 AND COMPARATIVE EXAMPLE 14

The resinous material employed comprises ASA. Molded test parts are dried in a circulating oven. Test bars are individually removed from the oven and contacted with water, after which, if necessary, any excess water on the surface of bar is wiped off, and each bar is brought into contact with a hot plate. Upon removal of the bar from the hot plate, only some stringing from the bar's surface is observed. The procedure of Example 14 is repeated except that each test bar is individually removed from the oven and brought into contact with the hot plate without significant exposure to moisture. Upon removal of the bar from the hot plate, significant stringing from the bar's surface is observed.

### EXAMPLE 15 AND COMPARATIVE EXAMPLE 15

The resinous material employed comprises MMA-ASA. Molded test parts are dried in a circulating oven. Test bars are individually removed from the oven and contacted with water, after which, if necessary, any excess water on the surface of bar is wiped off, and each bar is brought into contact with a hot plate. Upon removal of the bar from the hot plate, only some stringing from the bar's surface is observed. The procedure of Example 15 is repeated except that each test bar is individually removed from the oven and brought into contact with the hot plate without significant exposure to moisture. Upon removal of the bar from the hot plate, significant stringing from the bar's surface is observed.

### EXAMPLE 16 AND COMPARATIVE EXAMPLE 16

The resinous material employed comprises ASA and at least one resin selected from the group consisting of SAN, AM-SAN, MMA-SAN, and combinations thereof. Molded test parts are dried in a circulating oven. Test bars are individually removed from the oven and contacted with water, after which, if necessary, any excess water on the surface of bar is wiped off, and each bar is brought into contact with a hot plate. Upon removal of the bar from the hot plate, only some stringing from the bar's surface is observed. The procedure of Example 16 is repeated except that each test bar is individually removed from the oven and brought into contact with the hot plate without significant exposure to moisture. Upon removal of the bar from the hot plate, significant stringing from the bar's surface is observed.

### EXAMPLE 17 AND COMPARATIVE EXAMPLE 17

The resinous material employed comprises MMA-ASA and at least one resin selected from the group consisting of SAN, AM-SAN, MMA-SAN, and combinations thereof. Molded test parts are dried in a circulating oven. Test bars are individually removed from the oven and contacted with water, after which, if necessary, any excess water on the surface of bar is wiped off, and each bar is brought into contact with a hot plate. Upon removal of the bar from the hot plate, only some stringing from the bar's surface is observed. The procedure of Example 17 is repeated except that each test bar is individually removed from the oven and brought into contact with the hot plate without significant exposure to moisture. Upon removal of the bar from the hot plate, significant stringing from the bar's surface is observed.

## Claims

1. A method for reducing stringiness during hot plate welding of an article comprising a resinous composition which comprises at least one step of contacting with water a surface of the article to be welded.

2. The method of claim 1, further comprising the steps of (i) contacting a hot plate against the surface of a first article which had been previously contacted with water, thereby melting a portion of the surface of said article, (ii) removing the hot plate from said surface, and then (iii) adhering the melted portion to a second article to form a final article.

3. The method of claim 2, wherein the contacted surface of said second article is melted before contact with said first article.

4. The method of claim 3, wherein the contacted surface of said second article has been contacted with water before melting.

5. The method of claim 1, wherein contact with water is performed using at least one method selected from the group consisting of (a) immersing the article completely in water; (b) immersing in water at least that surface of the article to be subsequently contacted with the hot plate; (c) contacting at least that surface of the article to be subsequently contacted with the hot plate or at least that portion of said surface to be subsequently contacted with the hot plate with a medium comprising water, a spray of water, a steam jet, a wet paper towel, a wet sponge, a wet cloth, a wet conveyer belt, or moist air; and (d) aging the article in a chamber which is maintained at a higher humidity than ambient, or in which mist or moist air is circulating.

6. The method of claim 1, wherein the resinous composition comprises a rubber modified thermoplastic resin, ASA, polystyrene, syndiotactic polystyrene, a styrene/acrylonitrile copolymer, an alpha-methylstyrene/acrylonitrile copolymer, an alpha-mothylstyrone/styrone/acrylonitrile copolymer, a styrene/acrylonitrile/methyl methacrylate copolymer, an alpha-methylstyrene/acrylonitrile/methyl methacrylate copolymer, an alpha-methylstyrene/styrene/acrylonitrile/methyl methacrylate copolymer, a styrene/methyl methacrylate copolymer, a styrene/maleic anhydride copolymer; a styrene/acrylonitrile/maleic anhydride copolymer, a styrene/acrylonitrile/acrylic acid copolymer; an acrylonitrile-butadiene-styrene copolymer; an acrylic polymer; poly(methyl methacrylate); a rubber-modified acrylic polymer; rubber-modified PMMA; poly(vinyl chloride); a polycarbonate; a bisphenol A polycarbonate, a mixture of ASA and polycarbonate; a mixture of ASA and a polyamide; a mixture of ABS and polycarbonate; a mixture of ABS and a polyester; a mixture of ABS and poly(butylene terephthalate); a mixture of ABS and an acrylic polymer; a mixture of ABS and PMMA; a polyester, a poly(alkylene terephthalate), a poly(alkylene naphthalate), poly(ethylene terephthalate), poly(butylene terephthalate), poly(trimethylene terephthalate), poly(ethylene naphthalate), poly(butylene naphthalate), poly(cyclohexanedimethanol terephthalate), poly(cyclohexanedimethanol-co-ethylene terephthalate), poly(1,4-cyclohexane-dimethyl-1,4-cyclohexanediearboxylate), a polyarylate, a polyarylate with structural units derived from resorcinol and a mixture of iso- and terephthalic acids; a polyestercarbonate, a polyestercarbonate with structural units derived from bisphenol A, carbonic acid and a mixture of iso- and terephthalic acids, a polyestercarbonate with structural units derived from resorcinol, carbonic acid and a mixture of iso- and terephthalic acids, a polyestercarbonate with structural units derived from bisphenol A, resorcinol, carbonic acid and a mixture of iso- and terephthalic acids; a polyarylene ether homopolymer or copolymer, a polyarylene ether comprising 2,6-dimethyl-1,4-phenylene ether structural units, optionally in combination with 2,3,6-trimethyl-1,4-phenylene ether units; a polyetherimide, a polyetherketone, a polyetheretherketone, a polyethersulfone; a polyarylene sulfide, a polyarylene sulfone, polyphenylene sulfide, polyphenylene sulfone, a copolymers of polyphenylene sulfide with polyphenylene sulfone; a polyamide, poly(hexamethylene adipamide) poly(ε-aminocaproamide); a polyolefin homopolymer or copolymer, polyethylene, polypropylene, or a copolymer containing structural units derived from at least one of ethylene and propylene; a poly(ethylene-co-acrylate); a thermoplastic polyolefin; poly(phenylene ether)-polystyrene blend, poly(phenylene ether)-polyamide blend, poly(phenylene ether)-polyester blend, poly(butylene terephthalate)-polycarbonate blend, poly(ethylene terephthalate)-polycarbonate blend, polycarbonate-polyetherimide blend, polyester-polyetherimide blend, or MMA-ASA/MMA-SAN/AMSAN blend.

7. The method of claim 1, wherein the resinous composition comprises a rubber modified thermoplastic resin, ABS resin or a blend of ABS resin with at least one polycarbonate, or at least one ASA resin.

8. The method of claim 1, wherein the resinous composition comprises at least one of ASA or MMA-ASA in combination with at least one resin selected from the group consisting of SAN, AM-SAN, MMA-SAN, and combinations thereof.

9. The method of claim 1, wherein the resinous composition further comprises at least one additive selected from the group consisting of a fluoropolymer, polytetrafluoroethylene, a silicone oil, a stabilizer; a color stabilizer; a heat stabilizer; a light stabilizer; an antioxidant; a UV screener; a UV absorber; a flame retardant; an anti-drip agent; a lubricant; a flow promoter; a processing aid; a plasticizer; an antistatic agent; a mold release agent; an impact modifier; a filler; a colorant; a dye; a pigment; metal flakes; and mixtures thereof.

## Patentansprüche

1. Verfahren zur Verminderung des Fadenziehens während des Heizelementschweißens eines eine harzige Zusammensetzung aufweisenden Gegenstandes, umfassend mindestens einen Verfahrensschritt des Inkontaktbringens einer Oberfläche des zu verschweißenden Gegenstandes mit Wasser.

2. Verfahren nach Anspruch 1, weiterhin umfassend die Verfahrensschritte (i) des Inkontaktbringens eines Heizelementes mit der Oberfläche eines ersten Gegenstandes, welcher vorher mit Wasser in Kontakt gebracht wurde, wodurch ein Teil der Oberfläche des Gegenstandes schmilzt, (ii) des Entfernens des Heizelementes von der Oberfläche und anschließend (iii) des Anhaftens des geschmolzenen Abschnitts an einen zweiten Gegenstand um den fertigen Gegenstand auszubilden.

3. Verfahren nach Anspruch 2, wobei die in Kontakt gebrachte Oberfläche des zweiten Gegenstandes vor dem Kontakt mit dem ersten Gegenstand geschmolzen ist.

4. Verfahren nach Anspruch 3, wobei die in Kontakt gebrachte Oberfläche des zweiten Gegenstandes vor dem Schmelzen mit Wasser in Berührung gebracht wurde.

5. Verfahren nach Anspruch 1, wobei der Kontakt mit Wasser durch mindestens ein Verfahren hergestellt wird, welches ausgewählt ist aus der Gruppe von (a) vollständigem Eintauchen des Gegenstandes in Wasser; (b) Eintauchen zumindest der Oberfläche des Gegenstandes in Wasser, welche nachfolgend mit dem Heizelement in Kontakt gebracht wird; (c) Inkontaktbringen zumindest der Oberfläche des Gegenstandes, welche nachfolgend mit dem Heizelement in Kontakt gebracht wird, oder zumindest des Abschnitts der Oberfläche, welcher nachfolgend mit dem Heizelement in Kontakt gebracht wird, mit einem Medium, welches Wasser, einen Sprühnebel aus Wasser, einen Dampfstrahl, ein feuchtes Papierhandtuch, einen feuchten Schwamm, ein feuchtes Gewebe, ein feuchtes Fließband oder feuchte Luft umfasst; und (d) Altem des Gegenstandes in einem Raum, welcher auf einer höheren Luftfeuchtigkeit gehalten wird als die Umgebung oder in welchem Nebel oder feuchte Luft zirkulieren.

6. Verfahren nach Anspruch 1, wobei die harzige Zusammensetzung ein kautschukmodifiziertes thermoplastisches Harz, ASA, Polystyrol, syndiotaktisches Polystyrol, ein Styrol/Acrylnitril-Copolymer, ein alpha-Methylstyrol/Acrylnitaril-Copolymer, ein alpha-Methylstyrol/Styrol/Acrylnitril-Copolymer, ein Styrol/Acrylnitril/Methylmethacrylat-Copolymer, ein alpha-Methylstyrol/Acrylnitril/Methylmethacrylat-Copolymer, ein alpha-Methylstyrol/Styrol/Acrylnitril/Methylmethacrylat-Copolymer, ein Styrol/Methylmethacrylat-Copolymer, ein Styrol/Maleinsäureanhydrid-Copolymer; ein Styrol/Acrylnitril/Maleinsäureanhydrid-Copolymer, ein Styrol/Acrylnitril/Acrylsäure-Copolymer; ein Acrylnitril/Butadien/StyrolCopolymer; ein acrylhaltiges Polymer; Polymethylmethacrylat; ein kautschukmodifziertes acrylhaltiges Polymer; kautschukmodifiziertes PMMA; Polyvinylchlorid; ein Polycarbonat; ein Bisphenol A-Polycarbonat; eine Mischung aus ASA und Polycarbonat; eine Mischung aus ASA und einem Polyamid; eine Mischung aus ABS und Polycarbonat; eine Mischung aus ABS und einem Polyester; eine Mischung aus ABS und Polybutylenterephthalat; eine Mischung aus ABS und einem acrylhaltigen Polymer; eine Mischung aus ABS und PMMA; ein Polyester, ein Polyalkylenterephthalat, ein Polyalkylennaphthalat, Polyethylenterephthalat, Polybutylenterephthalat, Polytrimethylenterephthalat, Polyethylennaphthalat, Polybutylennaphthalat, Polycyclohexandimethanolterephthalat, Poly(cyclohexandimethanol-co-ethylenterephthalat), Poly-1,4-cyclohexandimethyl-1,4-cyclohexandicarboxylat, ein Polyarylat, ein Polyarylat mit aus Resorcinol und einer Mischung aus Iso- und Terephthalsäuren abgeleiteten Struktureinheiten; ein Polyestercarbonat, ein Polyestercarbonat mit aus Bisphenol A, Kohlensäure und einer Mischung aus Iso- und Terephthalsäuren abgeleiteten Struktureinheiten, ein Polyestercarbonat mit aus Resorcinol, Kohlensäure und einer Mischung aus Iso- und Terephthalsäuren abgeleiteten Struktureinheiten, ein Polyestercarbonat mit aus Bisphenol A, Resorcinol, Kohlensäure und einer Mischung aus Iso- und Terephthalsäuren abgeleiteten Struktureinheiten; ein Polyarylenether-Homopolymer oder -Copolymer, ein Polyarylenether, welcher 2,6-Dimcthyl-1,4-phenyletherstruktureinhei-ten aufweist, wahlweise in Verbindung mit 2,3,6-Trimethyl-1,4-phenylen-ethereinheiten; ein Polyetherimid, ein Polyetherketon, ein Polyetheretherketon, ein Polyethersulfon; ein Polyarylensulfid, ein Polyarylensufon, Polyphenylensulfid, Polyphenylensulfon, ein Copolymer aus Polyphenylensulfid und Polyphenylensulfon; ein Polyamid, Polyhexamethylenadipamid, Poly(e-aminocaproamid); ein Polyolefin-Homopolymer oder -Copolymer, Polyethylen, Polyprophylen oder ein Copolymer, welches zumindest aus Ethylen und/oder Propylen abgeleitete Struktureinheiten aufweist; ein Polyethylencoacrylat; ein thermoplastisches Polyolefin; Polyphenylenether-Polystyrol-Gemisch, Polyphenylenether-Polyamid-Gemisch, Polyphenylenether-Polyester-Gemisch, Polybutylenterephthalat-Polycarbonat-Gemisch, Polyethylenterephthalat- Polycarbonat-Gemisch, Polycarbonat-Polyetherimid-Gemisch, Polyester-Polyetherimid-Gemisch oder MMA-ASA/MMA-SAN/AMSAN-Gemisch umfasst.

7. Verfahren nach Anspruch 1, wobei die harzige Zusammensetzung ein kautschukmodifiziertes thermoplastisches Harz, ABS-Harz oder ein Gemisch aus ABS-Harz mit mindestens einem Polycarbonat oder zumindest ein ASA-Harz umfasst.

8. Verfahren nach Anspruch 1, wobei die harzige Zusammensetzung zumindest ASA und/oder MMA-ASA in Kombination mit mindestens einem Harz, welches ausgewählt ist aus der Gruppe, bestehend aus SAN, AM-SAN, MMA-SAN sowie deren Kombinationen, umfasst.

9. Verfahren nach Anspruch 1, wobei die harzige Zusammensetzung weiterhin mindestens ein Additiv umfasst, welches ausgewählt ist aus der Gruppe, bestehend aus einem Fluorpolymer, Polytetrafluorethylen, einem Silikonöl, einem Stabilisator; einem Farbstabilisator; einem Hitzestabilisator; einem Lichtstabilisator; einem Antioxidans; einem UV-Filter; einem UV-Absorber; einem Flammschutzmittel, einem Antitropfmittel; einem Gleitmittel; einem Verlaufsmittel, einem Verarbeitungshilfsmittel; einem Weichmacher; einem Antistatikum; einem Formtrennmittel; einem Schlagzähmodifizierungsmittel; einem Füllstoff; einem Farbstoff; einem Färbemittel; einem Pigment; Metallschuppen und deren Mischungen.

## Revendications

1. Procédé de réduction de la nature filandreuse pendant le soudage sur plaque chauffante d'un article comprenant une composition résineuse qui comprend au moins une étape consistant à mettre en contact une surface de l'article à souder avec de l'eau.

2. Procédé de la revendication 1, comprenant en outre les étapes consistant à (i) mettre en contact une plaque chauffante contre la surface d'un premier article qui a été préalablement mis en contact avec de l'eau, faisant ainsi fondre une partie de la surface dudit article, (ii) retirer la plaque chauffante de ladite surface puis (iii) faire adhérer la partie fondue à un deuxième article pour former un article fini.

3. Procédé de la revendication 2, dans lequel la surface en contact dudit deuxième article est fondue avant d'être mise en contact avec ledit premier article.

4. Procédé de la revendication 3, dans lequel la surface en contact dudit deuxième article a été mise en contact avec de l'eau avant la fusion.

5. Procédé de la revendication 1, dans lequel la mise en contact avec de l'eau est effectuée en utilisant au moins un procédé choisi dans le groupe constitué par (a) l'immersion complète de l'article dans de l'eau; (b) l'immersion dans de l'eau d'au moins cette surface de l'article à mettre ensuite en contact avec la plaque chauffante; (c) la mise en contact d'au moins cette surface de l'article à mettre ensuite en contact avec la plaque chauffante ou au moins cette partie de ladite surface à mettre ensuite en contact avec la plaque chauffante avec un milieu comprenant l'eau, une pulvérisation d'eau, un jet d'eau, une serviette en papier humide, une éponge humide, un tissu humide, une courroie transporteuse humide ou de l'air humide; et (d) le vieillissement de l'article dans une chambre maintenue à une humidité supérieure à l'humidité ambiante, ou dans laquelle de la buée ou de l'air humide circule.

6. Procédé de la revendication 1, dans lequel la composition résineuse comprend une résine thermoplastique modifiée par du caoutchouc, de l'ASA, du polystyrène, du polystyrène syndiotactique, un copolymère styrène-acrylonitrile, un copolymère alpha-méthylstyrène-acrylonitrile, un copolymère alpha-méthylstyrène-styrène-acrylonitrile, un copolymère styrène-acrylonitrile-méthacrylate de méthyle, un copolymère alpha-méthylstyrène-acrylonitrile-méthacrylate de méthyle, un copolymère alpha-méthylstyrène-styrène-acrylonitrile-méthacrylate de méthyle, un copolymère styrène-méthacrylate de méthyle, un copolymère styrène-anhydride maléique, un copolymère styrène-acrylonitrile-anhydride maléique, un copolymère styrène-acrylonitrile-acide acrylique, un copolymère acrylonitrile-butadiène-styrène; un polymère acrylique; un poly(méthacrylate de méthyle); un polymère acrylique modifié par du caoutchouc; du PMMA modifié par du caoutchouc; du poly(chlorure de vinyle); un polycarbonate; un polycarbonate de bisphénol A; un mélange d'ASA et de polycarbonate; un mélange d'ASA et d'un polyamide; un mélange d'ABS et de polycarbonate; un mélange d'ABS et d'un polyester; un mélange d'ABS et de poly(téréphtalate de butylène); un mélange d'ABS et d'un polymère acrylique; un mélange d'ABS et de PMMA; un polyester, un poly(téréphtalate d'alkylène), un poly(naphtalate d'alkylène), un poly(téréphtalate d'éthylène), un poly(téréphtalate de butylène), un poly(téréphtalate de triméthylène), du poly(naphtalate d'éthylène), un poly(naphtalate de butylène), un poly(téréphtalate de cyclohexanediméthanol), un poly(téréphtalate de cyclohexanediméthanol-coéthylène), un poly(1,4-cyclohexane-diméthyl-1,4-cyclohexanedicarboxylate), un polyarylate, un polyarylate ayant des motifs structuraux dérivés du résorcinol et d'un mélange d'acides iso- et téréphtaliques; un polyestercarbonate, un polyestercarbonate ayant des motifs structuraux dérivés du bisphénol A, d'acide carbonique et d'un mélange d'acides iso- et téréphtaliques; un homopolymère ou copolymère d'éther de polyarylène, un éther de polyarylène comprenant des motifs structuraux de l'éther de 2,6-diméthyl-1,4-phénylène, facultativement en combinaison avec des motifs d'éther de 2,3,6-triméthyl-1,4-phénylène; un polyétherimide, une polyéthercétone, un sulfure de polyéthercétone, une polyéthersulfone; un sulfure de polyarylène, une sulfone de polyarylène, un sulfure de polyphénylène, une sulfone de polyphénylène; un polyamide, un poly(adipamide d'hexaméthylène), un poly(e-aminocaproamide); un homopolymère ou copolymère de polyoléfine, un polyéthylène, un polypropylène ou un copolymère contenant des motifs structuraux dérivés d'au moins un de l'éthylène et du propylène; un poly(éthylène-coacrylate); un polyoléfine thermoplastique; un mélange poly(éther de phénylène)-polystyrène, un mélange poly(éther de phénylène)-polyamide, un mélange poly(éther de phénylène)-polyester, un mélange poly(téréphtalate de butylène)-polycarbonate, un mélange poly(téréphtalate d'éthylène)-polycarbonate, un mélange polycarbonate-polyétherimide, un mélange polyester-polyétherimide ou un mélange MMA-ASA/MMA-SAN/AMSAN.

7. Procédé de la revendication 1, dans lequel la composition résineuse comprend une résine thermoplastique modifiée par du caoutchouc, de la résine ABS ou un mélange de résine ABS avec au moins un polycarbonate, ou au moins une résine ABS.

8. Procédé de la revendication 1, dans lequel la composition résineuse comprend au moins l'un de l'ASA ou du MMA-ASA en combinaison avec au moins une résine choisie dans le groupe constituée par le SAN, l'AM-SAN, le MMA-SAN et des combinaisons de ceux-ci.

9. Procédé de la revendication 1, dans lequel la composition résineuse comprend en outre au moins un additif choisi dans le groupe constitué par un fluoropolymère, un polytétrafluoroéthylène, une huile de silicone, un stabilisant; un stabilisant de couleurs; un stabilisant thermique; un photostabilisant; un antioxydant; un anti-UV; un absorbant d'UV; un ignifuge; un agent anti-goutte; un lubrifiant; un agent d'écoulement; un adjuvant de fabrication; un plastifiant; un agent antistatique; un agent de démoulage; un agent antichoc; un agent de remplissage; un colorant; une teinture; un pigment; des flocons de métal; et des mélanges de ceux-ci.
